# EUROPÄISCHE PATENTSCHRIFT

(11) **EP 2 652 290 B1**
(45) Veröffentlichungstag und Bekanntmachung des Hinweises auf die Patenterteilung: **24.10.2018**
(21) Anmeldenummer: 11785586.6
(22) Anmeldetag: 08.11.2011
(51) Int. Cl.: F02C 6/12, F01D 25/14, F04D 29/58, F04D 29/68, F04D 25/04

(54) **VERDICHTER FÜR DIE AUFLADUNG EINER BRENNKRAFTMASCHINE**
COMPRESSOR FOR THE SUPERCHARGING OF AN INTERNAL COMBUSTION ENGINE
COMPRESSEUR SERVANT À LA SURALIMENTATION D'UN MOTEUR À COMBUSTION INTERNE

(30) Priorität: 16.12.2010 DE 102010063197
(43) Veröffentlichungstag der Anmeldung: 23.10.2013
(73) Patentinhaber: Bayerische Motoren Werke Aktiengesellschaft, 80809 München (DE)
(72) Erfinder: KAUFMANN, Matthäus, 80636 München (DE); KOBOR, Alexander, 4400 Steyr (AT); SEEBACHER, Alexander, 4400 Steyr (AT); GRUBBAUER, Martin, 4442 St. Peter/Au (AT)
(86) Internationale Anmeldenummer: PCT/EP2011/005605
(87) Internationale Veröffentlichungsnummer: WO 2012/079664

(56) Entgegenhaltungen:
- EP-A2- 1 316 699
- DE-A1- 4 027 174
- DE-A1- 10 321 572
- DE-A1- 10 325 980
- DE-A1- 19 647 605
- DE-A1-102007 023 142

## Beschreibung

Die vorliegende Erfindung betrifft einen Verdichter für die Aufladung einer Brennkraftmaschine nach dem Oberbegriff des Anspruchs 1.

Verdichter für Brennkraftmaschinen sind bereits in einer Vielzahl von Ausführungsformen bekannt geworden. Sie besitzen eine große Bedeutung beispielsweise bei der Leistungssteigerung von Brennkraftmaschinen mit kleinen Hubräumen, die im Zuge des so genannten Downsizing und der damit verbundenen Kraftstoffersparnis eingesetzt werden. Die Benutzer von Fahrzeugen mit solchen Motoren erwarten nämlich trotz der kleinen zur Verfügung stehenden Hubräume eine hohe Leistungsabgabe, was dazu führt, dass die Verdichter von Abgasturboladern über den gesamten Bereich ihres jeweiligen Kennfelds betrieben werden müssen.

Das Kennfeld eines solchen Verdichters wird am linken Kennfeldrand von der Pumpgrenze begrenzt. Wird die Pumpgrenze im Betrieb des Verdichters erreicht, löst sich bei hohen Druckverhältnissen und kleinen Volumenströmen die Strömung von den Verdichterschaufeln ab und es kommt zu einer rückwärts gerichteten Strömung durch den Verdichter, bis sich wieder ein stabiles Druckverhältnis mit positivem Volumenstrom einstellt. Bei diesem Vorgang kommt es zur Geräuschbildung, das einem Pumpen gleicht, ursächlich für dieses Phänomen ist ein für den gewünschten Betriebspunkt des Motors zu schmales Verdichterkennfeld.

Um diesem Problem zu begegnen, ist anhand der DE 196 47 605 C2 bereits ein Abgas-Turbolader für Brennkraftmaschinen bekannt geworden, der strömungstechnisch parallel zum Einlasskanal eine das Kennfeld des Verdichters stabilisierende Einrichtung in der Form eines Ringkanals besetzt, durch den ein Bypassvolumen entgegen der Hauptströmungsrichtung strömen kann und im Pumpgrenzbereich auftretenden Druckspannungen dämpfend begegnen kann.

Anhand der DE 103 21 572 A1 sind ein Ladeluftverdichter für eine Brennkraftmaschine, Brennkraftmaschine und Verfahren hierzu bekannt geworden. Der Ladeluftverdichter weist ein in einem Verdichtereinlass drehbar gelagertes Verdichterrad auf, dem über den Verdichtereinlasskanal Verbrennungsluft zuführbar ist. Stromabwärts des Verdichterrades wird ein Teilstrom der verdichteten Ladeluft abgezweigt und einer Temperaturabsenkeinheit zugeführt. Nach dem Durchströmen der Temperaturabsenkeinheit wird der abgezweigte Teilstrom einem Bauteil des Ladeluftverdichters als Kühlluft zugeführt.

Anhand der DE 40 27 147 A1 ist eine Kennfeldstabilisierung bei einem Radialverdichter bekannt geworden. Dazu erhält der Radialverdichter einen Zirkulationsraum, der einen Druckausgleich zwischen Laufrad und Einlassbereich ermöglicht. Der Einlassbereich weist einen Einlaufring auf, der es erlaubt, die Strömung im Eintrittsbereich so zu beeinflussen, dass eine Kennfeldstabilisierung ohne wesentliche Verluste verwirklicht wird. Durch Änderung des Einlaufrings kann der Verdichter auf kundenspezifische Anforderungen abgestimmt werden.

Ein weiteres Problem beim Betrieb eines Verdichters ist eine zu hohe Verdichteraustrittstemperatur. Bei zu hoher Temperatur tritt nämlich das Problem auf, dass aufgrund von Blow-by in der Luft im Verdichter vorhandenes Öl zum Cracken neigt und so über die Laufzeit den Diffusorspalt verklebt und damit die Temperatur am Austritt des Verdichters weiter ansteigt. Hierzu ist es gemäß der DE 103 25 980 A1 bekannt, das Spiralgehäuse des Verdichters mit einem Kühlraum zu umgeben.

Ausgehend hiervon liegt der vorliegenden Erfindung die Aufgabe zu Grunde, einen Verdichter zu schaffen, der den steigenden Akustikanforderungen und steigenden Leistungsanforderungen gerecht wird und auch bei grenzwertiger Auslegung des Abgasturboladers keine für den Benutzer eines damit ausgestatteten Fahrzeugs störende Geräusche erzeugt.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft einen Verdichter für die Aufladung einer Brennkraftmaschine mit einem, einen Diffusorkanal und einen Diffusor aufweisenden Verdichtergehäuse sowie einem, in einem Einlasskanal des Verdichtergehäuses drehbar gelagerten Verdichterrad und einer stromaufwärts des Diffusorkanals angeordneten Eintrittsfläche zu einem Ringkanal, der zum Einlasskanal weitgehend konzentrisch angeordnet ist und einer stromaufwärts des Ringkanals angeordneten Austrittsfläche, wobei darüber hinaus das Verdichtergehäuse einen Raum zum Durchtritt von Kühlmedium besitzt. Der Raum ist ein Ringraum, der den Ringkanal zumindest entlang eines Teilbereichs seiner in Längsrichtung des Einlasskanals verlaufenden Längserstreckung umgibt.

Mit der das Kennfeld des Verdichters verbreiternden Einrichtung in der Form der Eintrittsfläche, dem Ringkanal und der Austrittsfläche aus dem Ringkanal wieder in den Einlasskanal zurück wird erreicht, dass im Falle einer Rückströmung im Einlasskanal entgegen der Hauptströmungsrichtung strömendes Fluid über die Eintrittsfläche in den Ringkanal gelangt und von diesem über die Austrittsfläche wieder in die Hauptströmungsrichtung des Einlasskanals zurückgeführt wird. Dadurch wird eine Erhöhung des Verdichterdurchsatzes erreicht und der Neigung der Ablösung der Strömung von den Verdichterschaufeln entgegengewirkt, wodurch der Neigung zur Geräuschbildung auch bei kleinen Volumenströmen und hohen Druckverhältnissen entgegengewirkt wird.

Zudem kann durch ein durch den Raum im Verdichtergehäuse durchtretendes Kühlmedium eine Verringerung der Temperatur im Bereich des Diffusorkanals und des Diffusors erreicht werden, wodurch der Neigung von vorhandenem Öl zum Cracken im Diffusorspalt entgegengewirkt werden kann und darüber hinaus eine Absenkung der Temperatur der den Verdichter verlassenen Ladeluft erreicht wird.

Die Erfindung sieht vor, dass der Raum ein den Austrittsbereich des Einlasskanals zum Diffusor zumindest bereichsweise umgebender Ringraum ist. Der Raum kann den Austrittsbereich des Einlasskanals in Richtung zum Diffusor je nach gewünschter Applikation vollständig oder auch nur teilweise umgeben. Sie hängt beispielsweise von den zur Verfügung stehenden Platzverhältnissen ab oder davon, welche Kühlleistung im Einzelfall benötigt wird.

Auch ist es nach der Erfindung vorgesehen, dass sich der Raum in radialer Richtung des Verdichtergehäuses zumindest entlang eines Teilbereichs des Diffusorkanals weitgehend parallel zum Diffusorkanal erstreckt. Der Raum kann daher sowohl auf der Verdichterrad Seite unterhalb des Diffusors angeordnet sein oder an der das Verdichtergehäuse abschließenden Stirnseite und zudem auch an beiden genannten Positionen. Dies hängt beispielsweise wieder von der benötigten Kühlleistung und den Platzverhältnissen beim Einbau des Verdichters am Motor ab.

Auch ist es nach der Erfindung vorgesehen, dass der Raum ein Ringraum ist, der den Ringkanal zumindest entlang eines Teilbereichs seiner in Längsrichtung des Einlasskanals verlaufenden Längserstreckung umgibt. Es bedeutet dies mit anderen Worten, dass der Raum in radialer Richtung des Verdichtergehäuses radial außerhalb des Ringkanals angeordnet ist und diesen vollständig oder bereichsweise umgibt.

Eine größtmögliche Kühlleistung kann dann erreicht werden, wenn der Raum das Verdichtergehäuse im Bereich zwischen dem Diffusorkanal und Diffusor und einer den Einlasskanal umgebenden äußeren Stirnfläche sowie einer weitgehend parallel zum Einlasskanal angeordneten Außenfläche weitgehend vollständig ausfüllt.

Die Erfindung sieht auch vor, dass die das Kennfeld stabilisierende Einrichtung und das Verdichtergehäuse entkoppelt vorliegen. Zu diesem Zweck ist es nach der Erfindung vorgesehen, dass die das Kennfeld stabilisierende Einrichtung von einem rohrstückförmigen Gehäuse gebildet wird, welches den Einlasskanal und die Eintrittsfläche sowie die Austrittsfläche aufnimmt und in einen Ringraum des Verdichtergehäuses eingeführt werden kann derart, dass eine Austrittsfläche des Einlasskanals an einer Eintrittsfläche in den Diffusorkanal anliegt.

Die Eintrittsfläche kann nach der vorliegenden Erfindung von mindestens einem in dem rohrstückförmigen Gehäuse oder dem Verdichtergehäuse gebildeten Einströmkanal gebildet werden, der entgegen der Hauptdurchströmungsrichtung des Einlasskanals geneigt ausgebildet ist.

Die Mittenposition des Einströmkanals in die das Kennfeld stabilisierende Einrichtung besitzt dabei in Hauptdurchströmungsrichtung einen Abstand zur Eintrittskante des Verdichterrads von null bis zur halben Verdichterradbreite. Der Einströmkanal liegt also so weit entgegen der Hauptströmungsrichtung stromaufwärts, dass eine Druckausbildung am Verdichterrad nicht dafür sorgt, dass die unter Druck gesetzte Luft bereits vom Verdichterrad in den Ringraum befördert wird.

Darüber hinaus sieht die Erfindung auch vor, dass die Mittenposition des Einströmkanals in Hauptdurchströmungsrichtung von der Eintrittskante des Verdichterrads bis zu einer Position verlagert werden kann, an der der Neigungswinkel von Verdichterradschaufeln relativ zur Längsmittelachse des Verdichterrads einen Wert von weitgehend 45 Grad einnimmt. Damit wird in vorteilhafter Weise erreicht, dass einer Rezirkulation gegen hohen Druck entgegengewirkt werden kann, was zu Wirkungsgradeinbußen des Verdichters führen würde.

Der Einströmkanal ist dabei nach der Erfindung in einem Winkel im Bereich von einem bis etwa 100° relativ zur Längsmittelachse in Hauptdurchströmungsrichtung des Einlasskanals geneigt ausgebildet.

Die Austrittsfläche ist relativ zum Eintrittsflächenbereich des Einlasskanals so angeordnet, dass eine Staudruckbildung an der Austrittsflächenkontur vermieden wird. Dadurch kann Wirkungsgradverschlechterungen des Verdichters wirksam begegnet werden.

Die Erfindung sieht auch vor, dass das Verhältnis aus Austrittsfläche zur Eintrittsfläche mindestens eins beträgt. Dadurch wird erreicht, dass es innerhalb des Ringkanals nicht zu einer Staudruckbildung kommt. Auch sieht die Erfindung vor, dass die Abwicklung der Austrittsfläche nicht kleiner ist die Abwicklung der Eintrittsfläche. Dies ermöglicht, dass die Geometrien der Eintrittsflächen und Austrittsflächen von unterschiedlichen Ausführungsformen definiert werden, beispielsweise als Ringspaltfläche mit Schlitzen, kreisförmige Öffnungen oder elliptische Öffnungen oder dergleichen.

Es ist dabei möglich, die minimale bzw. maximale Eintrittsfläche über eine Verhältniskennzahl K zu definieren, die sich aus dem gesamten Eintrittsluftmassenstrom zur Eintrittsfläche bestimmt. Die Form der Fläche an sich wird dadurch nicht zur entscheidenden Kerngröße, von maßgeblicher Bedeutung ist somit nur mehr der Querschnitt.

Die Verhältniskennzahl K ist infolgedessen eine Funktion des gesamten Luftmassenstroms und des Eintritts- bzw. Austrittsquerschnitts.

Das Maximum der Verhältniskennzahl Kmax entspricht dabei dem maximalen Massenstrom dividiert durch die minimale Spalteintrittsfläche des Eintrittsquerschnitts und ist kleinergleich 100.

Das Minimum der Verhältniskennzahl Kmin entspricht dabei dem minimalen Massenstrom dividiert durch die maximale Spalteintrittsfläche und ist größergleich 0.

Die Spalteintrittsfläche kann dabei durch unterschiedliche Konturen von Öffnungen erzeugt werden, wie dies vorstehend bereits erläutert worden ist. Die Kontur an sich hat dabei auf die Kennzahl keinen Einfluss, maßgeblich ist die Summe der Flächen der jeweiligen Konturen.

Die Austrittsfläche aus dem Ringkanal wird dabei von mindestens einem in dem rohrstückförmigen Gehäuse gebildeten Ausströmkanal gebildet, der relativ zu der Längsmittelachse des Einlasskanals in einem Winkel im Bereich von einem bis 179° geneigt ausgebildet ist, wobei bei einer bevorzugten Ausführungsform der Ausströmkanal in einem Winkel von 90° zur Längsmittelachse des Einlasskanals angeordnet ist.

Die Erfindung wird im folgenden anhand der Zeichnung näher erläutert. Diese zeigt in:
Fig. 1 eine teilweise geschnittene Darstellung eines Radialverdichters nach einer Ausführungsform gemäß der vorliegenden Erfindung;
Fig. 2 eine Schnittansicht eines Radialverdichters nach einem nicht erfindungsgemäßen Beispiel, welches jedoch weitere Aspekte der Erfindung zeigt;
Fig. 3 eine Darstellung ähnlich derjenigen nach Fig. 2 zur Erläuterung des Flächenverhältnisses zwischen der Austrittsfläche und der Eintrittsfläche;
Fig. 4 eine Darstellung ähnlich derjenigen nach Fig. 3 zur Erläuterung des Neigungswinkels des Einströmkanals;
Fig. 5 eine Darstellung ähnlich derjenigen nach Fig. 2 zur Erläuterung der Lage des Ausströmkanals relativ zum Einlasskanals des Radialverdichters;
Fig. 6 eine Darstellung ähnlich derjenigen nach Fig. 2 zur Erläuterung des Neigungswinkels des Ausströmkanals relativ zum Einlasskanals des Radialverdichters; und
Fig. 7 eine grafische Darstellung eines Kennfelds des Radialverdichters mit und ohne Kennfeld stabilisierende Einrichtung.

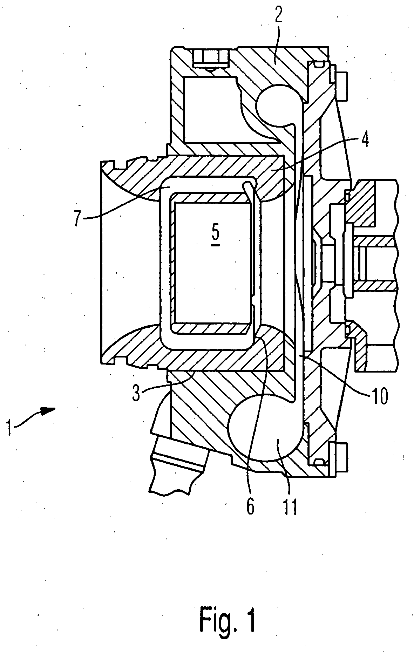

Fig. 1 der Zeichnung zeigt eine Schnittdarstellung eines Radialverdichters 1 nach einer Ausführungsform gemäß der vorliegenden Erfindung. Der Radialverdichter 1 besitzt ein Verdichtergehäuse 2 mit einer Ausnehmung 3, in die ein rohrstückförmiges Gehäuse 4 eingesetzt ist.

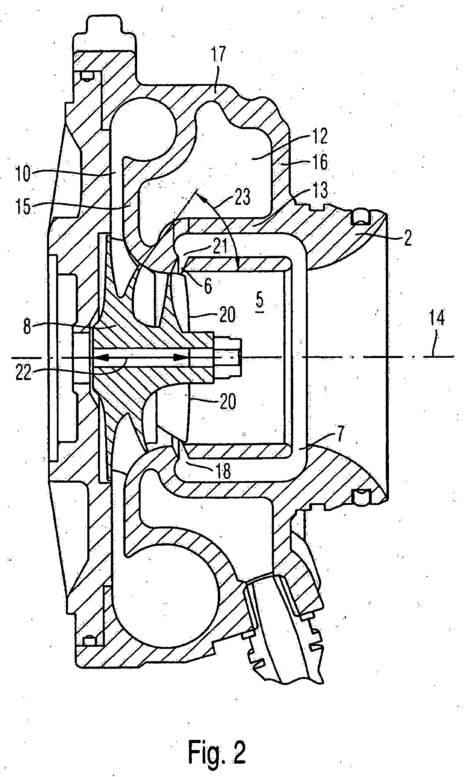

Das Gehäuse 4 stellt den Einlasskanal 5 für ein beispielsweise in Fig. 2 der Zeichnung dargestelltes Verdichterrad 8 bereit und weist eine Eintrittsfläche 6, eine Austrittsfläche 7 und einen konzentrisch zum Einlasskanal 5 angeordneten Ringkanal 9 auf. Durch die Integration der Kennfeld stabilisierenden Einrichtung in der Form der Eintrittsfläche 6, der Austrittsfläche 7 und dem Ringkanal 9 in das rohrstückförmige Gehäuse 4 kann eine Entkopplung dieser Einrichtung vom Verdichtergehäuse 2 erreicht werden.

Das Verdichtergehäuse 2 besitzt darüber hinaus einen Diffusorkanal 10 und einen sich strömungstechnisch hieran anschließenden Diffusor 11.

Wie es sich beispielsweise anhand von Fig. 2 der Zeichnung ergibt, weist das Verdichtergehäuse 2 einen Raum 12 auf, der von Kühlmittel durchströmt werden kann. Bei der dargestellten Ausführungsform nimmt der Raum 12 einen größtmöglichen Raum im Verdichtergehäuse 2 ein und erstreckt sich mit einer inneren Umfangswand 13 entlang der Längsmittelachse 14 des Einlasskanals 5 und besitzt eine an den Diffusorkanal 10 angrenzende Wand 15 und wird einlassseitig des Einlasskanals 5 von einer Wand 16 des Verdichtergehäuses 2 begrenzt. Zudem wird der Raum 12 im radial äußeren Bereich von einer Wand 17 des Verdichtergehäuses begrenzt.

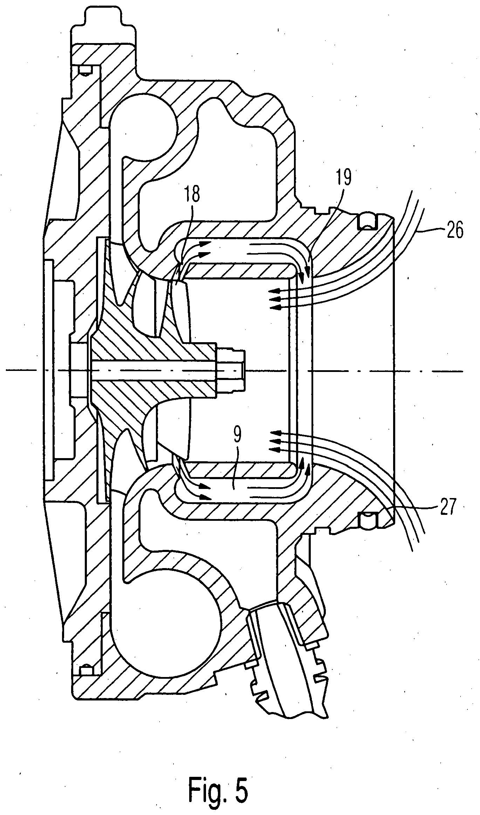

Die Eintrittsfläche 6 bildet einen Einströmkanal 18 für rückströmenden Massenstrom aus, wie sich dies anhand von Fig. 5 der Zeichnung ergibt. Der rückströmende Massenstrom strömt entlang des Ringkanals 9 in Richtung zu dem Ausströmkanal 19, der sich in Richtung zum Einlasskanal 5 durch die Austrittsfläche 7 öffnet.

Der Einströmkanal 18 besitzt eine Neigung entgegen der Hauptdurchströmungsrichtung H, die in Fig. 2 der Zeichnung anhand eines Pfeils dargestellt ist.

Das Verdichterrad 8 besitzt an seiner Einströmseite eine Verdichterradeintrittskante, von der aus betrachtet die Mittenposition der Eintrittsfläche 6 bzw. des Einströmkanals 18 einen Abstand von null bis zu der Hälfte der in Fig. 2 dargestellten Verdichterradbreite aufweist.

Die Mittenposition 21 des Einströmkanals 18 kann auch durch den Neigungswinkel 23 der Verdichterradschaufel relativ zur Längsmittelachse 14 definiert werden.

Ausgehend von der Verdichterradeintrittskante 20 kann die Mittenposition 21 in Hauptdurchströmungsrichtung H betrachtet bis zu einem Ort verlagert werden, an denen der Neigungswinkel 23 einen Wert von weitgehend 45° einnimmt. Eine weitere Verlagerung in Richtung der Hauptdurchströmungsrichtung H wäre kontraproduktiv, da es dadurch zu einer Wirkungsgradverschlechterung des Verdichters kommen würde, da es beim Druckaufbau zu einer ungewollten Einströmung in den Ringkanal 9 kommen würde.

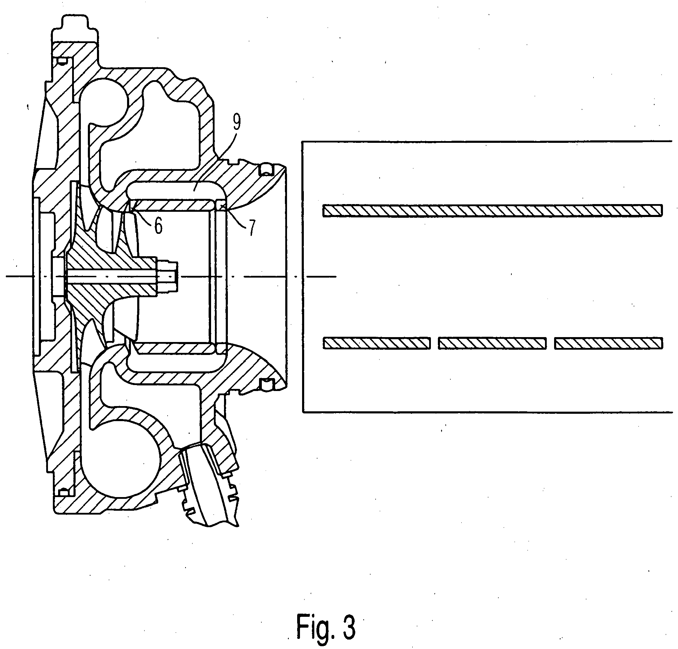

Fig. 3 der Zeichnung zeigt eine Darstellung zur Erläuterung des Flächenverhältnisses aus der abgewickelten Austrittsfläche 7 und der abgewickelten Eintrittsfläche 6. Die Konfiguration ist dabei derart gewählt, dass die abgewickelte Austrittsfläche mindestens so groß ist wie die abgewickelte Eintrittsfläche, um die Ausbildung eines Staudrucks im Ringkanal 9 zu vermeiden.

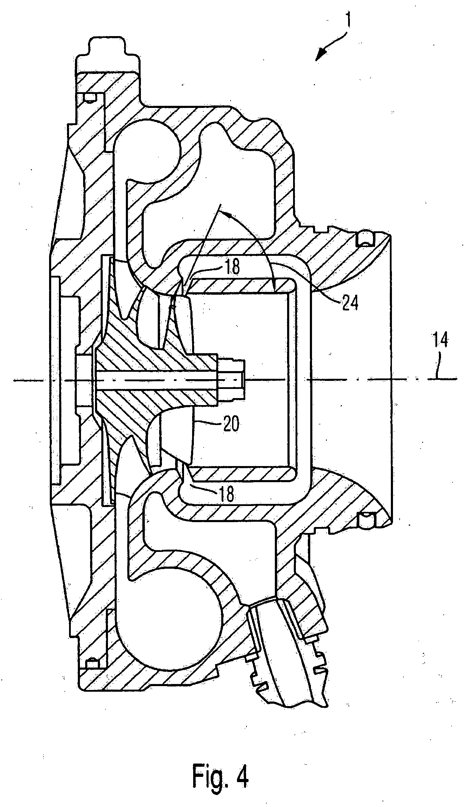

Fig. 4 der Zeichnung zeigt eine Schnittdarstellung zur Erläuterung des Neigungswinkels 24 des Einströmkanals 18 relativ zur Längsmittelachse 14 des Radialverdichters 1. Bei dem dargestellten Beispiel weist der Neigungswinkel 24 einen Wert von etwa 66° auf, ganz allgemein kann der Neigungswinkel 24 oder Eintrittswinkel einen Wert zwischen 1° und 100° einnehmen.

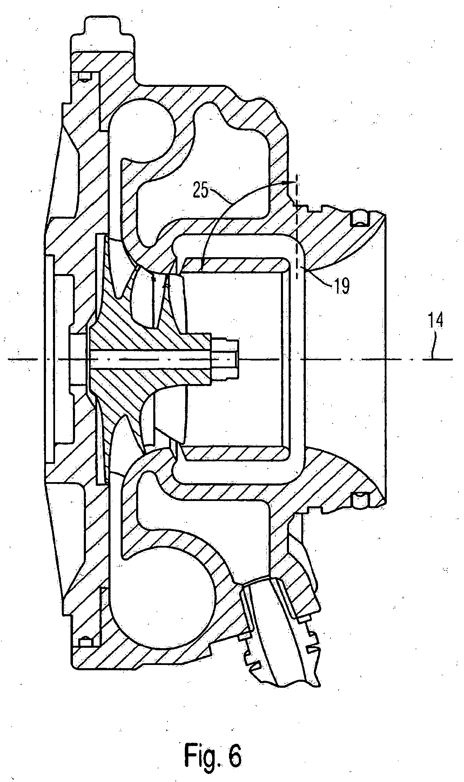

Fig. 6 der Zeichnung dient der Erläuterung des Neigungswinkels 25 der Mitte des Ausströmkanals 19 relativ zur Längsmittelachse 14 des Radialverdichters 1. Bei dem dargestellten Beispiel weist der Neigungswinkel 25 einen Wert von 90° auf, ganz allgemein kann der Neigungswinkel 25 Werte im Bereich von 1° bis 179° einnehmen. Der dargestellte Wert von 90° ist besonders vorteilhaft, da er den Luftmassenstrom 26, der in den Ansaugbereich 27 eintritt, nicht behindert. Es hat sich gezeigt, dass Neigungswinkel 25 im Bereich von 85° bis 100° den Wirkungsgrad des Radialverdichters 1 nicht negativ beeinflussen.

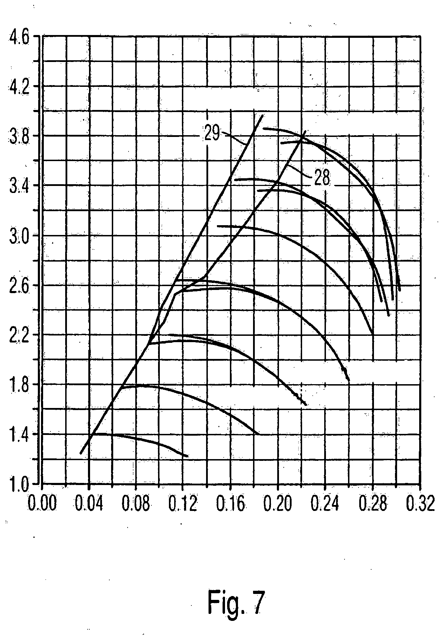

Fig. 7 zeigt ein Kennfeld eines Radialverdichters mit und ohne Kennfeld stabilisierende Einrichtung.

Der Kurvenzug 28 zeigt die Pumpgrenze des Radialverdichters ohne den Einsatz einer Kennfeld stabilisierenden Einrichtung und der Kurvenzug 29 die nach links verschobene Pumpgrenze des erweiterten Kennfelds. Darüber hinaus wird durch die Ausbildung des Verdichtergehäuses mit einem Raum zum Durchtritt von Kühlmedium eine Absenkung der Temperatur des den Verdichter verlassenden Luftmassenstroms erreicht. Dadurch kann eine Leistungssteigerung erzielt werden und außerdem wird durch die Absenkung der Temperatur im Verdichtergehäuse auch die Neigung des Öls, im Drosselspalt zu cracken und diesen zu verkleben, wesentlich verringert.

Der Raum 12 dient dem Durchtritt von Kühlmedium in der Form von beispielsweise Kühlflüssigkeit, die aus dem Kühlkreislauf des Motors des Fahrzeugs stammen kann. Durch das Kühlmedium wird der Diffusorspalt gekühlt und damit die Neigung von im Diffusorspalt vorhandenem Öl zum Cracken verringert. Dadurch wird der Diffusorspalt nicht von verkoktem Öl verklebt und verkleinert und einer dadurch bedingten weiteren Temperaturerhöhung im Diffusorspalt entgegen gewirkt.

Darüber hinaus besitzt der erfindungsgemäße Verdichter auch den Vorteil, beim Einsatz unter hohen Außentemperaturen nicht zum Verkoken des Drosselspaltes zu neigen, wodurch sich der erfindungsgemäße Verdichter auch insbesondere für die Anwendung bei hohen Außentemperaturen eignet.

Durch die Kennfelderweiterung wird die Gefahr des Auftretens unerwünschter Geräusche des Verdichters im Bereich der Pumpgrenze verringert. Dies gilt sowohl bei einstufigen Systemen als auch bei mehrstufigen Systemen, die im Übergangsbereich vom mehrstufigen Bereich zum einstufigen Bereich zum Kreischen neigen. Die Neigung zur Geräuschbildung, die üblicherweise mit einem Pumpen unter voller Last verbunden ist, wird verringert. Auch kann mit dem erfindungsgemäßen Verdichter bei mehrstufigen Systemen die Leistung im Übergangsbereich vom mehrstufigen Bereich zum einstufigen Bereich erhöht werden.

### Bezugszeichenliste

- 1: Radialverdichter
- 2: Verdichtergehäuse
- 3: Ausnehmung
- 4: rohrstückförmiges Gehäuse
- 5: Eintrittskanal
- 6: Eintrittsfläche
- 7: Austrittsfläche
- 8: Verdichterrad
- 9: Ringkanal
- 10: Diffusorkanal
- 11: Diffusor
- 12: Raum
- 13: innere Umfangswand
- 14: Längsmittelachse
- 15: Wand
- 16: Wand
- 17: Wand
- 18: Einströmkanal
- 19: Ausströmkanal
- 20: Verdichterradeintrittskante
- 21: Mittenposition
- 22: Verdichterradbreite
- 23: Neigungswinkel
- 24: Neigungswinkel
- 25: Neigungswinkel
- 26: Luftmassenstrom
- 27: Ansaugbereich
- 28: Kurvenzug
- 29: Kurvenzug
- H: Hauptdurchströmungsrichtung

## Patentansprüche

1. Verdichter für die Aufladung einer Brennkraftmaschine mit einem, einen Diffusorkanal (10) und einen Diffusor (11) aufweisenden Verdichtergehäuse (2) sowie einem, in einem Einlasskanal (5) des Verdichtergehäuses (2) drehbar gelagerten Verdichterrad (8) und einer stromaufwärts des Diffusorkanals (10) angeordneten Eintrittsfläche (6) zu einem Ringkanal (9), der zum Einlasskanal (5) weitgehend konzentrisch angeordnet ist und einer stromaufwärts des Ringkanals (9) angeordneten Austrittsfläche (7) und einem im Verdichtergehäuse (2) vorgesehenen Raum (12) zum Durchtritt von Kühlmedium, wobei der Raum (12) ein Ringraum ist, der den Ringkanal (9) zumindest entlang eines Teilbereichs seiner in Längsrichtung des Einlasskanals (5) verlaufenden Längserstreckung umgibt, **dadurch gekennzeichnet, dass** der Verdichter ein rohrstückförmiges Gehäuse (4) umfasst, welches den Einlasskanal (5) und die Eintrittsfläche (6) sowie die Austrittsfläche (7) aufnimmt und in einen Ringraum des Verdichtergehäuses (2) einführbar ist derart, dass eine Austrittsfläche des Einlasskanals (5) an einer Eintrittsfläche in den Diffusorkanal anliegt.

2. Verdichter nach Anspruch 1, **dadurch gekennzeichnet, dass** der Raum (12) ein den Austrittsbereich des Einlasskanals (5) zum Diffusor (10) zumindest bereichsweise umgebender Ringraum ist.

3. Verdichter nach Anspruch 1 oder 2, **dadurch gekennzeichnet, dass** sich der Raum (12) in radialer Richtung des Verdichtergehäuses (2) zumindest entlang eines Teilbereichs des Diffusorkanals (10) weitgehend parallel zum Diffusorkanal (10) erstreckt.

4. Verdichter nach einem der vorstehenden Ansprüche, **dadurch gekennzeichnet, dass** der Raum (12) das Verdichtergehäuse (2) im Bereich zwischen dem Diffusorkanal (10) und Diffusor (11) und einer den Einlasskanal (5) umgebenden äußeren Stirnfläche (16) sowie einer weitgehend parallel zum Einlasskanal (5) angeordneten Außenfläche (17) weitgehend vollständig ausfüllt.

5. Verdichter nach einem der vorstehenden Ansprüche, **dadurch gekennzeichnet, dass** die Eintrittsfläche (6) von mindestens einem in dem rohrstückförmigen Gehäuse (4) gebildeten Einströmkanal (18) gebildet ist, der entgegen der Hauptdurchströmungsrichtung (H) des Einlasskanals (5) geneigt ausgebildet ist.

6. Verdichter nach Anspruch 5, **dadurch gekennzeichnet, dass** die Mittenposition des Einströmkanals (18) in Hauptdurchströmungsrichtung (H) einen Abstand zur Eintrittskante (20) des Verdichterrads (8) von Null bis zur halben Verdichterradbreite besitzt.

7. Verdichter nach Anspruch 5 oder 6, **dadurch gekennzeichnet, dass** die Mittenposition des Einströmkanals (18) in Hauptdurchströmungsrichtung (H) von der Eintrittskante (20) der Verdichterrads (8) bis zu einer Position verlagerbar ist, an der der Neigungswinkel (23) von Verdichterradschaufeln relativ zur Längsmittelachse (14) des Verdichterrads (8) einen Wert von weitgehend 45 Grad einnimmt.

8. Verdichter nach einem der vorstehenden Ansprüche 5 bis 7, **dadurch gekennzeichnet, dass** der Einströmkanal (18) in einem Neigungswinkel (24) von etwa 66 Grad relativ zur Längsmittelachse (14) des Einlasskanals (5) geneigt ausgebildet ist.

9. Verdichter nach einem der vorstehenden Ansprüche, **dadurch gekennzeichnet, dass** die Austrittsfläche (7) relativ zum Eintrittsflächenbereich des Einlasskanals (5) derart angeordnet ist, dass eine Staudruckbildung an der Austrittsflächenkontur vermieden ist.

10. Verdichter nach einem der vorstehenden Ansprüche, **dadurch gekennzeichnet, dass** das Verhältnis aus Austrittsfläche (7) zur Eintrittsfläche (6) mindestens Eins beträgt.

11. Verdichter nach einem vorstehenden Ansprüche, **dadurch gekennzeichnet, dass** die Austrittsfläche (7) von mindestens einem in dem rohrstückförmigen Gehäuse (4) gebildeten Ausströmkanal (19) gebildet ist, der relativ zu der Längsmittelachse (14) des Eintrittskanals (5) in einem Neigungswinkel (25) im Bereich von einem bis 179 Grad geneigt ausgebildet ist.

## Claims

1. A compressor for supercharging an internal combustion engine with a compressor housing (2) having a diffuser duct (10) and a diffuser (11), and also with a compressor impeller (8), rotatably mounted in an inlet duct (5) of the compressor housing (2), and an entry face (6), arranged upstream from the diffuser duct (10), to an annular duct (9) which is arranged largely concentrically to the inlet duct (5), and an exit face (7) arranged upstream from the annular duct (9), and a space (12) provided in the compressor housing (2) for cooling medium to pass through, wherein the space (12) is an annular space which surrounds the annular duct (9) at least along a partial region of its longitudinal extent running in the longitudinal direction of the inlet duct (5), **characterised in that** the compressor comprises a housing (4) in the shape of a tube piece which receives the inlet duct (5) and the entry face (6) and also the exit face (7) and can be introduced into an annular space of the compressor housing (2) in such a way that an exit face of the inlet duct (5) lies against an entry face in the diffuser duct.

2. A compressor according to Claim 1, **characterised in that** the space (12) is an annular space which surrounds the exit region of the inlet duct (5) to the diffuser (10) at least in regions.

3. A compressor according to Claim 1 or Claim 2, **characterised in that** the space (12) in the radial direction of the compressor housing (2) extends at least along a partial region of the diffuser duct (10) largely in parallel to the diffuser duct (10).

4. A compressor according to one of the preceding claims, **characterised in that** the space (12) largely completely fills the compressor housing (2) in the region between the diffuser duct (10) and diffuser (11) and an outer end face (16) surrounding the inlet duct (5) and also an outer face (17) arranged largely in parallel to the inlet duct (5).

5. A compressor according to one of the preceding claims, **characterised in that** the entry face (6) is formed by at least one inflow duct (18) formed in the housing (4) in the shape of a tube piece, which duct is formed inclined counter to the main direction of throughflow (H) of the inlet duct (5).

6. A compressor according to Claim 5, **characterised in that** the middle position of the inflow duct (18) in the main direction of throughflow (H) is at a distance from the leading edge (20) of the compressor impeller (8) of zero to half the width of the compressor impeller.

7. A compressor according to Claim 5 or Claim 6, **characterised in that** the middle position of the inflow duct (18) can be displaced in the main direction of throughflow (H) from the leading edge (20) of the compressor impeller (8) up to a position at which the angle of inclination (23) of compressor impeller vanes relative to the longitudinal centre axis (14) of the compressor impeller (8) assumes a value of largely 45 degrees.

8. A compressor according to one of the preceding Claims 5 to 7, **characterised in that** the inflow duct (18) is formed to be inclined at an angle of inclination (24) of approximately 66 degrees relative to the longitudinal centre axis (14) of the inlet duct (5).

9. A compressor according to one of the preceding claims, **characterised in that** the exit face (7) is arranged relative to the entry face region of the inlet duct (5) in such a way that the formation of back-pressure at the exit face contour is avoided.

10. A compressor according to one of the preceding claims, **characterised in that** the ratio of exit face (7) to entry face (6) is at least one.

11. A compressor according to one of the preceding claims, **characterised in that** the exit face (7) is formed by at least one outflow duct (19) formed in the housing (4) in the shape of a tube piece, which duct is formed inclined relative to the longitudinal centre axis (14) of the entry duct (5) at an angle of inclination (25) in the range of one to 179 degrees.

## Revendications

1. Compresseur de suralimentation d'un moteur à combustion interne comportant un boîtier de compresseur (2) avec un canal de diffuseur (10) et un diffuseur (11) ainsi qu'un rotor de compresseur (8) monté à rotation dans le canal d'entrée (5) du boîtier de compresseur (2) et une surface d'entrée (6) vers un canal annulaire (9) en amont du canal de diffuseur (10) et qui est très largement concentrique au canal d'entrée (5) et une surface de sortie (7) en amont du canal annulaire (9) et une chambre (12) dans le boîtier de compresseur (2) pour le passage d'un milieu de refroidissement,
• la chambre (12) est une chambre annulaire qui entoure le canal annulaire (9) au moins le long d'une zone partielle de son extension longitudinale selon la direction longitudinale du canal d'entrée (5),
un compresseur **caractérisé en ce qu'**
il comporte un boîtier (4) en forme d'élément tubulaire recevant le canal d'entrée (5), la surface d'entrée (6) ainsi la surface de sortie (7) et se logeant dans le volume annulaire du boîtier de compresseur (2) de façon que la surface de sortie du canal d'entrée (5) s'applique contre la surface d'entrée du canal du diffuseur.

2. Compresseur, selon la revendication 1,
**caractérisé en ce que**
la chambre (12) est un volume annulaire entourant au moins par zone, la plage de sortie du canal d'entrée (5) vers le diffuseur (10).

3. Compresseur, selon la revendication 1 ou 2,
**caractérisé en ce que**
la chambre (12) s'étend dans la direction radiale du boîtier de compresseur (2) au moins le long d'une partie du canal de diffuseur (10), de manière pratiquement pas parallèle à ce canal du diffuseur (10).

4. Compresseur, selon l'une quelconque des revendications précédentes,
**caractérisé en ce que**
la chambre (12) du boîtier de compresseur (2) est pratiquement rempli complètement dans la zone comprise entre le canal de diffuseur (10) et le diffuseur (11) et une surface frontale (16) extérieure entourant le canal d'entrée (5) ainsi qu'une surface extérieure (17) pratiquement parallèle au canal d'entrée (5).

5. Compresseur, selon l'une quelconque des revendications,
**caractérisé en ce que**
la surface d'entrée (6) est formée par au moins un canal d'entrée (18) réalisée dans un boîtier (4) en forme d'élément tubulaire, et incliné contre la direction d'écoulement principale (H) du canal d'entrée (5).

6. Compresseur, selon la revendication 5,
**caractérisé en ce que**
la distance de la position médiane du canal d'entrée (18) dans la direction principale d'écoulement (H) par rapport à l'arrêt d'entrée (20) du rotor de compresseur (8) est comprise entre 0 et la moitié de la largeur du rotor de compresseur.

7. Compresseur, selon la revendication 5 ou 6,
**caractérisé en ce que**
la position médiane du canal d'entrée (18) est déplacée dans la direction principale d'écoulement (H) de l'arrête d'entrée (20) du rotor du compresseur (8) jusqu'à une position dans laquelle l'angle d'inclinaison (23) des aubes du rotor de compresseur, par rapport à l'axe centralement du canal (14) du rotor de compresseur (8) prend une valeur en grande partie égale à 45°.

8. Compresseur, selon l'une des revendications précédentes 5 à 7,
**caractérisé en ce que**
le canal d'entrée (18) est incliné selon un angle d'inclinaison (24) de l'ordre de 66° par rapport à l'axe central (14) du canal d'entrée (5).

9. Compresseur, selon l'une des revendications précédentes,
**caractérisé en ce que**
la surface de sortie (7) est placée par rapport à la zone de surface d'entrée du canal d'entrée (5) pour éviter le développement d'une pression dynamique sur le contour de la surface de sortie.

10. Compresseur, selon l'une des revendications précédentes,
**caractérisé en ce que**
le rapport entre la surface de sortie (7) et la surface d'entrée (6) est au moins égal à 1.

11. Compresseur, selon l'une quelconque des revendications,
**caractérisé en ce que**
la surface de sortie (7) est constituée par au moins un canal de sortie (19) formé dans le boîtier tubulaire (4) et incliné par rapport à l'axe central longitudinal (14) du canal d'entrée (5) suivant un angle d'inclinaison (25) dans une plage allant jusqu'à 179°.
